# EUROPÄISCHE PATENTSCHRIFT

(11) **EP 1 820 972 B1**
(45) Veröffentlichungstag und Bekanntmachung des Hinweises auf die Patenterteilung: **01.04.2009**
(21) Anmeldenummer: 07003093.7
(22) Anmeldetag: 14.02.2007
(51) Int. Cl.: F04D 29/58, B64D 15/12

(54) **Beheizbare Schaufel für Propeller, Ventilatoren und Ähnliches**
Heatable blades for propellers, ventilators and similar
Aube pouvant être chauffée pour hélices, ventilateurs ou analogues

(30) Priorität: 15.02.2006 IT BO20060115
(43) Veröffentlichungstag der Anmeldung: 22.08.2007
(73) Patentinhaber: Fieni Giovanni S.N.C., 40051 Altedo BO (IT); Technoalpin S.P.A., 39100 Bozen (IT)
(72) Erfinder: Fieni, Cesare, 40051 Altedo (BO) (IT); Melloni, Alfredo, 40051 Altedo (BO) (IT)
(74) Vertreter: Graf, Helmut

(56) Entgegenhaltungen:
- FR-A1- 2 793 469
- US-A- 2 964 444
- US-A- 5 545 009
- US-A- 5 709 532
- US-A1- 2002 192 075
- US-A1- 2005 129 389

## Beschreibung

Gegenstand der vorliegenden Erfindung ist eine beheizbare Schaufel für Ventilatoren, Gebläse oder Gebläserotoren oder dergleichen gemäß Oberbegriff Patentanspruch 1 sowie Gebläserotor mit mehreren Schaufeln gemäß Oberbegriff Patentanspruch 8.

Aus zahlreichen Anwendungen sind Propeller und/oder Ventilatoren bekannt, welche bei sehr niedrigen Temperaturen arbeiten, bei welchen die in der Luft enthaltene Feuchtigkeit oder das in den Anlagen, in denen der Propeller installiert ist, vorhandene Wasser gefriert, wie z.B. bei Schneekanonen und usw.
Das Vereisen der Schaufeln, d.h. die Bildung von Eisschichten auf ihrer Oberfläche ist eine äußerst unerwünschte und schädliche Begleiterscheinung, die zur Entstehung von störenden Vibrationen bei der Rotation des Ventilators oder des Propellers führt, wodurch wiederum die mechanischen Teile beschädigt werden können.
Dieses Problem wird heutzutage durch die Anwendung von einem oder mehrerer, elektrisch gespeisten Heizelementen gelöst, die entlang der sogenannten Schaufelnase, d.h. entlang ihrer Außenränder oder an anderen Stellen der Schaufeloberfläche, montiert werden.

Diese Technik erweist sich in einigen speziellen Anwendungen jedoch als nicht vollständig zufriedenstellend, da die Beheizung der Schaufel, die mit den auf der Oberfläche angebrachten Heizelementen erzielt werden kann, alles andere als gleichmäßig ist, d.h. sie ist im Bereich des jeweiligen Heizelementes wirksam, während sie in den weiter vom Heizelement entfernten Bereichen unzureichend ist.

Bekannt sind weiterhin Ventilatoren (US 2002/0192075 A1, US 2005/0129389 A1, US 5,545,009) mit durch elektrische Heizelemente beheizten Flügeln. Die Heizelemente sind dabei als elektrische Heizleiter ausgeführt, die sich als geschlossene Schlaufe oder als mäanderförmiges Heizelement innerhalb des Flügels erstrecken.

Bekannt ist weiterhin eine elektrische Drehkupplung (FR 2 793 469 A1) für die Verwendung bei Rotoren von Hubschraubern zur elektrischen Versorgung von Funktionselementen am Rotorblatt, u.a. auch von elektrisch betriebenen Heizelementen. Die genaue Ausbildung der Heizelemente ist nicht beschrieben.

Bekannt sind schließlich Propeller für Propellerflugzeuge (US 2,964,444, US 5,709,532 A1) mit elektrisch betriebenen Heizelementen in den Propellerflügeln zur Vermeidung einer Vereisung. Die Heizelemente sind als Heizmatten oberflächennah, d.h. unterhalb einer äußeren Flügelfläche vorgesehen.

Hauptaufgabe der vorliegenden Erfindung ist die Schaffung einer Schaufel für Ventilatoren, Gebläsemotoren oder dergleichen, welche für die Verwendung bei niedrigen Temperaturen geeignet ist und im Wesentlichen auf der gesamten Oberfläche gleichmäßig beheizt werden kann, und zwar bei einer einfachen, relativ leicht ausführbaren, sicheren sowie relativ preisgünstigen Konstruktion.

Zur Lösung dieser Aufgabe ist eine Schaufel entsprechend dem Patentanspruch 1 ausgebildet. Ein mehrere derartige Schaufeln aufweisender Gebläserotor ist Gegenstand des Patentanspruches 8.

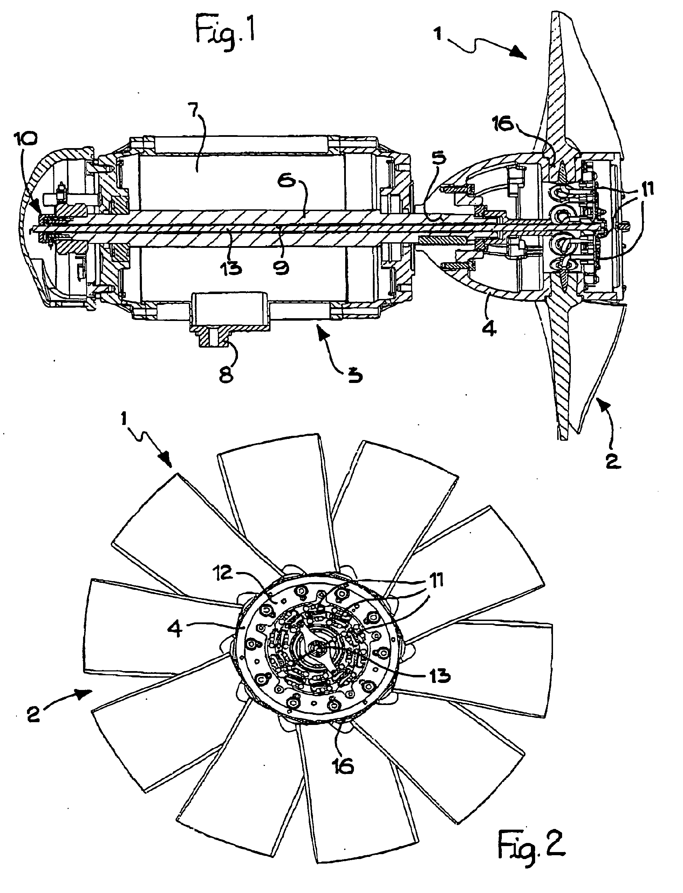

Weitere Merkmale und Besonderheiten gehen aus der detaillierten Beschreibung einer bevorzugten, aber nicht ausschließlichen Ausführungsform einer erfindungsgemäßen, beheizbaren Schaufel für Propeller, Ventilatoren und Ähnliches hervor, welche in den beiliegenden Zeichnungen beispielhaft, ohne einschränkende Wirkung illustriert wird.
Es zeigen:
- Figur 1 einen teilweise im Schnitt dargestellten, seitlichen Aufriss eines Ventilators oder Gebläserotors mit Motorgruppe, welcher mit beheizbaren, erfindungsgemäßen Schaufeln versehen ist;
- Figur 2 eine Frontansicht desselben Ventilators;
- Figur 3 eine Perspektivansicht der erfindungsgemäßen Schaufel;
- Figur 4 einen teilweise im Schnitt dargestellten, seitlichen Aufriss derselben Schaufel.
Im nachfolgenden Ausführungsbeispiel können einzelne Merkmale durch andere Merkmale ersetzt werden, welche in anderen Ausführungsbeispielen vorhanden sind. In der Fig. 1 ist mit 1 ein beheizbarer Flügel bzw. eine beheizbare Schaufel für Propeller, Ventilatoren, Rotoren für Gebläse oder dergleichen in ihrer Gesamtheit bezeichnet.

Mehrere erfindungsgemäße, beheizbare Schaufeln sind beispielsweise auf einen Ventilator oder Rotor montiert, welcher in seiner Gesamtheit mit der Ziffer 2 bezeichnet und beispielsweise, aber nicht ausschließlich auf einer Schneekanone montiert ist. Die erfindungemäße Schaufel 1 kann allerdings auch auf Propellern Ventilatoren oder Rotoren montiert werden, welche für jede beliebige andere Anwendung bestimmt sein können, insbesondere für solche Anwendungen, die für den Betrieb bei sehr niedrigen Temperaturen vorgesehen sind.
In Figur 1 ist der Ventilator 2 mit einer entsprechenden Motorgruppe verbunden, welche in ihrer Gesamtheit mit 3 gekennzeichnet ist.

Im Detail betrachtet, umfasst der Rotor oder Ventilator 2 eine Nabe 4, welche eine Axialbohrung 5 aufweist, durch welche eine Welle 6 eines Elektromotors 7 beliebiger Art hindurchgeführt wird, wobei die Welle 6 mit der Nabe 4 verkeilt ist. Der Motor 7 wird über eine Klemme 8 elektrisch versorgt und ist auf festen Teilen der in den Figuren der Einfachheit halber nicht dargestellten, aber im wesentlichen traditionellen Apparate oder Anlagen gelagert.

Die Welle 6 umfasst einen durchgehenden axialen Hohlraum 9, an dessen entgegengesetzten Enden jeweils elektrische Anschlussmittel 10 zur Elektroversorgung, z.B. Bürstenmittel und elektrische Verteilungsmittel 11, im wesentlicher traditioneller Art, vorgesehen sind, welche im gleichen Winkelabstand auf einer Scheibe 12 befestigt und verteilt sind, die fest mit der Nabe 4 (Figur 2) verbunden ist. Die Anschlussmittel 10 und die Verteilungsmittel 11 sind mit einem elektrischen Leiter 13 verbunden, welcher durch den axialen Hohlraum 9 der Welle 6 hindurchgeführt ist.

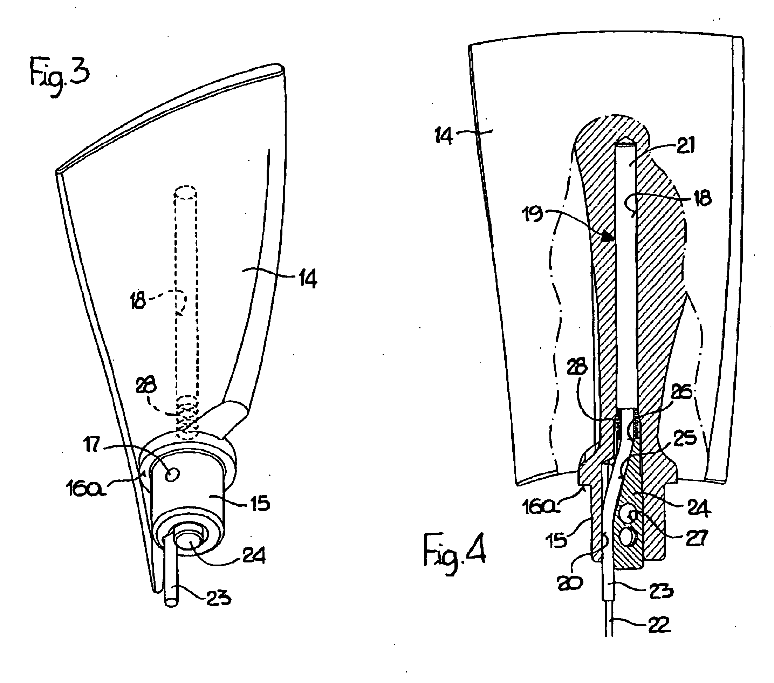

Jede auf die Nabe 4 montierte Schaufel 1 umfasst (Figuren 3, 4) mindestens einen, im wesentlichen gebogenen Körper 14 mit einem angemessenen bzw. geeigneten Profil und einer an die jeweilige Anwendung angepassten Größe. Jeder Körper 14 ist mit mindestens einem Kupplungsabschnitt 15 mit der Nabe 4 des Ventilators 2 verbunden ist, wobei der Abschnitt 15 im wesentlichen zylindrisch ist und dazu dient, in einen entsprechenden Sitz 16 eingesetzt zu werden, welcher auf der Nabe 4 vorgesehen ist. Der Kupplungsabschnitt 15 bildet weiterhin eine Schulter 16a zur Auflage auf einem Sitz 16 und ist mit mindestens einer quer verlaufenden oder quer liegenden Gewindebohrung 17 versehen.

Vorteilhafterweise ist die erfindungsgemäße Schaufel 1 mit mindestens einem im wesentlichen längs verlaufenden Kanal 18 versehen, welcher an mindestens einem Ende offen ist und in welchen jeweils ein Heizelement 19 eingesetzt ist. Dieses dient zum Beheizen der Schaufel, insbesondere in der Weise, dass die Wärme auf im wesentlichen gleichförmige Weise über die gesamte Oberfläche des gebogenen Körpers 14 hinweg verteil wird.

Im Einzelnen ist der längs verlaufende im wesentlichen koaxial im Kupplungsabschnitt 15 angeordnete Kanal 18 an die Nabe 6 offen und steht in Verbindung mit der Gewindebohrung 17. Der längs verlaufende Kanal 18 ist weiterhin im wesentlichen zylindrisch, besitzt einen angemessenen Durchmesser und bildet im Bereich des Kupplungsabschnittes 15 einen Endabschnitt 20 mit einer - bezogen auf die Achse des Kanals 18 - im wesentlichen exzentrischen, geometrischen Form, dessen Funktion im folgenden noch erläutert wird.

Erfindungsgemäß besteht das Heizelement 19 in vorteilhafter Weise aus mindestens einem Heizelement in Kerzen- oder Zylinderform. Das Heizelement 19 umfasst mindestens einen, im Wesentlichen zylindrischen Stab oder Kopf 21 aus Metall und ist mit Elektroversorgungskabeln 22 verbunden, die durch eine flexible Ummantelung 23 geschützt und auf geeignete Weise mit den Verteilungsmitteln 11 verbunden sind. Der Stab 21 ist mit enger Toleranz in den längs verlaufenden Kanal 18 eingesetzt und dient dazu, die Wärme mittels Kontakt in der gesamten Masse des gebogenen Körpers 14 und folglich über seine gesamte Oberfläche hinweg zu verteilen und dadurch die Eisbildung zu vermeiden.

Vorteilhafterweise ist ein Stift oder Bolzen 24 vorgesehen, welcher abnehmbar in den Endabschnitt 20 des längs verlaufenden Kanals 18 eingesetzt ist und dazu dient, das Heizelement 19 im Kanal 18 zu befestigen und dank der exzentrischen, geometrischen Form des Endabschnitts 20 gleichzeitig die Durchführung der Elektroversorgungskabel 22 zu ermöglichen. Der Stift 24 bildet seitlich eine geneigte Oberfläche 25 aus, welche die Durchführung der Ummantelung 23 nach außen ermöglich. Der Stift 24 bildet weiterhin eine frontale Anschlagfläche 26 und mindestens eine querliegende, durchgehende Bohrung 27. Die querliegende Bohrung 27 ermöglicht es, mit mindestens einer, im Gewindeloch eingreifenden, Schraube 17 den Stift 24 bezogen auf den Kupplungsabschnitt 15 und mit derselben Schraube auch den Kupplungsabschnitt 15 bezogen auf die Nabe 4 zu blockieren bzw. fixieren, in welcher ein entsprechendes Befestigungsloch für jede Schaufel vorgesehen ist.

Die erfindungsgemäße Schaufel umfasst außerdem eine zylindrische Schraubenfeder 28 zur elastischen Befestigung des jeweiligen Stabes 21, welche dazu dient, entlang des längs verlaufenden Kanals 18, zwischen dem Stift 24 und dem Heizelement 19 druckverriegelt zu werden. Insbesondere besitzt die Feder 28 ein Ende, welches an der Front- oder Stirnfläche 26 des Stiftes 24 aufliegt, während das andere Ende an der End- oder Stirnfläche des Metallstabs 21 anliegt.

Die Funktionsweise des Ventilators mit den erfindungsgemäßen Schaufeln ist anhand der obigen Erläuterungen nunmehr leicht zu verstehen.

Dabei wurde aufgezeigt, auf welche Weise die Erfindung die gesteckten Ziele und Zwecke erreicht.

Wie man ersehen kann, erlaubt das Heizelement 19, das in den längs durch den gebogenen Körper der Schaufel hindurch verlaufenden Kanal eingesteckt wird, eine gleichmäßige Wärmeverteilung über gesamte Oberfläche des Körpers hinweg, so dass es nicht zum unerwünschten Vereisen einiger Bereiche der Schaufel kommen kann. Die so konzipierte Erfindung kann zahlreiche Änderungen und Varianten erfahren, welche allesamt unter das erfinderische Konzept fallen.

Alle Einzelteile können durch gleichwertige andere Teile ersetzt werden.
Die Ausführung der vorliegenden Erfindung wird - nach Erhalt der ggf. erforderlichen Genehmigung durch die zuständigen Behörden, insbesondere, was Sicherheit, Umweltschutz und Gesundheitsschutz anbelangt - unter gewissenhafter Einhaltung der geltenden gesetzlichen Bestimmungen und Vorschriften bezüglich der Produkte durchgeführt, welche Gegenstand der Erfindung oder mit dieser verbunden sind. Dabei können zur Realisierung praktisch alle beliebigen, den jeweiligen Anforderungen entsprechenden Materialien, Formen und Größen verwendet werden, ohne den Schutzbereich der nachstehenden Ansprüche zu verlassen.

## Patentansprüche

1. Beheizbare Schaufel für Ventilatoren, Gebläse oder dergleichen, wobei die Schaufel mindestens einen im wesentlichen gebogenen Schaufelkörper (14) mit geeigneten Profil aufweist, wobei der Schaufelkörper (14) mit mindestens einem Kupplungsabschnitt (15) zum Verbinden mit einer Nabe (4) des Ventilators und/oder des Gebläses oder eines Gebläserotors ausgestattet ist, wobei im Schaufelkörper (14) mindestens ein, sich längs des Schaufelkörpers erstreckender und am Kupplungsabschnitt (15) offener Kanal (18) vorgesehen ist, in dem wenigstens ein Heizelement (19) zum Beheizen der Schaufel mit einer gleichmäßigen Wärmeverteilung über die gesamte Oberfläche des Schaufelkörpers (14) untergebracht ist,
**dadurch gekennzeichnet,**
**dass** der Kanal (18) an seinem dem Kupplungsabschnitt (15) entfernt liegenden Ende verschlossen ist, und dass das Heizelement (19) von mindestens einem in den Kanal (18) eingesetzten Heizelement in Kerzen- oder Stabform gebildet ist.

2. Schaufel nach Anspruch 1, **dadurch gekennzeichnet, dass** zu elastischen oder federnden Befestigung des wenigstens einen Heizelementes (19) eine Schraubenfeder (28) vorgesehen ist, die im Kanal (18) zwischen dem Heizelement (19) und einem in das offene Ende des Kanals (18) eingesetzten Stift (24) unter Druck vorgespannt angeordnet ist.

3. Schaufel nach Anspruch 1 oder 2, **dadurch gekennzeichnet, dass** der längs verlaufende Kanal (18) im Bereich des Kupplungsabschnitts (15) mindestens an einem Endabschnitt (20) eine bezogen auf die Achse des längs verlaufenden Kanals (18) exzentrische geometrische Form aufweist.

4. Schaufel nach einem der vorhergehenden Ansprüche, **dadurch gekennzeichnet, dass** das Heizelement (19) in Kerzen- oder Stabform mindestens einen, im wesentlichen zylindrischen, Metallstiel oder -stab bzw. metallisches Kopfstück (21) umfasst, welcher bzw. welches mit Elektroversorgungskabeln (22) verbunden ist, die in eine flexible Ummantelung eingebettet sind.

5. Schaufel nach einem der vorhergehenden Ansprüche, **dadurch gekennzeichnet, dass** sie mindestens einen Stift (24) umfasst, welcher dazu dient, in den Endabschnitt (20) des längs verlaufenden Kanals (18) eingesetzt zu werden, um das Heizelement (19) in diesem Kanal (18) zu befestigen und gleichzeitig die Durchführung der Elektroversorgungskabel (22) zu ermöglichen.

6. Schaufel nach einem der vorhergehenden Ansprüche, **dadurch gekennzeichnet, dass** der Stift (24) seitlich eine geneigte Oberfläche (25) ausbildet, welche die Durchführung der Elektroversorgungskabel ermöglicht, wobei der Stift (24) außerdem eine querliegende, durchgehende Bohrung (27) ausbildet, welche dazu dient, mit mindestens einer Schraube, die in ein im Kupplungsabschnitt (15) vorgesehenes Gewindeloch (17) eingreift, den Stift (24) bezogen auf die Schaufel zu befestigen und mit derselben Schraube den Kupplungsabschnitt (15) bezogen auf die Nabe (6) zu befestigen, in welcher ein entsprechendes Befestigungsloch für jede Schaufel vorgesehen ist.

7. Schaufel nach einem der vorhergehenden Ansprüche, **dadurch gekennzeichnet, dass** sie mindestens eine Schraubenfeder (28) zur elastischen Befestigung umfasst, und dass Schraubenfeder (28) im längs verlaufenden Kanals (18) zwischen dem Stift (24) und das Heizelement (19) druckverriegelt bzw. unter Druck vorgespannt angeordnet ist.

8. Gebläserotor mit mehreren Schaufeln, die an der Nabe (4) einer Rotorwelle (6) verkeilt sind, wobei die Rotorwelle (6) mit mindestens einem durchgehenden, axialen Kanal (9) versehen ist, an dessen entgegen gesetzten Enden elektrische Anschlussmittel (10) zur Elektroversorgung, z.B. Bürstenmittel und elektrische Verteilermittel (11) vorgesehen sind, die im gleichen Winkelabstand auf einer Scheibe (12) befestigt und verteilt sind, welche mit der Nabe (4) verbunden ist, wobei die Anschlussmittel (10) und die Verteilungsmittel (11) mittels eines Elektroleiters (13) miteinander verbunden sind, der durch den axialen Hohlraum (9) der Welle (6) hindurchgeführt ist,
**dadurch gekennzeichnet,**
**dass** die Schaufeln entsprechend einem der vorhergehenden Ansprüche ausgebildet sind.

## Claims

1. Heatable blade for ventilators, fans or the like wherein the blade has at least one substantially curved blade body (14) with a suitable profile wherein the blade body (14) is provided with at least one coupling section (15) for connecting to a hub (4) of the ventilator and/or of the fan or a fan rotor, wherein in the blade body (14) there is at least one channel (18) which extends along the blade body and opens at the coupling section (15) wherein at least one heating element (19) is fitted in the channel for heating the blade with uniform heat distribution over the entire surface area of the blade body (14)
**characterised in that** the channel (18) is closed at its end remote from the coupling section (15) and that the heating element (19) is formed by at least one heating element of candle or rod shape inserted in the channel (18).

2. Blade according to claim 1 **characterised in that** a helical spring (28) is provided for elastically or resiliently fixing the at least one heating element (19) and this coil spring is mounted pretensioned under pressure in the channel (18) between the heating element (19) and a pin (24) inserted in the open end of the channel (18).

3. Blade according to claim 1 or 2 **characterised in that** the longitudinally aligned channel (18) has in the region of the coupling section (15) in at least at one end section (20) a geometric shape which is eccentric in relation to the axis of the longitudinally aligned channel (18).

4. Blade according to one of the preceding claims **characterised in that** the heating element (19) in candle or rod shape has at least one substantially cylindrical metal shaft or rod or a metal head piece (21) which is connected to the electric cables (22) which are embedded in a flexible casing.

5. Blade according to one of the preceding claims **characterised in that** it comprises at least one pin (24) which serves for insertion into the end section (20) of the longitudinally aligned channel (18) in order to fix the heating element (19) in this channel (18) whilst at the same time allowing the electric cables (22) to pass through.

6. Blade according to one of the preceding claims **characterised in that** the pin (24) forms at the side an inclined surface area (25) which enables the electric cables to pass through wherein the pin (24) forms furthermore a transverse full-length bore (27) which serves with the aid of at least one screw which engages in a threaded hole (17) provided in the coupling section (15) to fix the pin (24) in relation to the blade and with the aid of the same screw to fix the coupling section (15) in relation to the hub (6) in which a corresponding fastening hole is provided for each blade.

7. Blade according to one of the preceding claims **characterised in that** it comprises at least one coil spring (28) for the elastic fixing, and that the coil spring (28) is mounted in the longitudinally aligned channel (18) pretensioned under pressure or pressure-locked between the pin (24) and the heating element (19).

8. Fan rotor with several blades which are splined on the hub (4) of a rotor shaft (6) wherein the rotor shaft (6) is provided with at least one full-length axial channel (9) at the opposite ends of which are provided electrical connectors (10) for the electric supply, e.g. brush members and electrical distributor means (11) which are spaced out and fixed at the same angular spacing on a disc (12) which is connected to the hub (4) wherein the connectors (10) and the distributor means (11) are connected to one another by means of an electric conductor (13) which is passed through the axial hollow space (9) of the shaft (6),
**characterised in that** the blades are formed according to one of the preceding claims.

## Revendications

1. Pale chauffante pour ventilateurs, appareils soufflants ou analogues, la pale présentant au moins un corps de pale (14) essentiellement incurvé avec profil approprié, le corps de pale (14) étant muni d'au moins une section de couplage (15) pour raccord avec un moyeu (4) du ventilateur et/ou de l'appareil soufflant ou d'un rotor d'appareil soufflant, au moins un canal (18) dans le corps de pale (14) étant prévu, qui s'étend le long du corps de pale et est ouvert sur la section de couplage (15), dans lequel au moins un élément chauffant (19) est abrité pour chauffer la pale par une distribution uniforme de chaleur sur l'ensemble de la surface du corps de pale (14),
**caractérisée en ce que**
le canal (18) est fermé sur son extrémité éloignée de la section de couplage (15) et **en ce que** l'élément chauffant (19) est formé d'au moins un élément chauffé inséré dans le canal (18) et qui est en forme de bougie ou de bâtonnet.

2. Pale selon la revendication 1, **caractérisée en ce que** dans un but de fixation élastique ou par ressort du au moins un élément chauffant (19) est prévu un ressort en hélice (28), lequel est disposé précontraint sous pression dans le canal (18) entre l'élément chauffant (19) et un bâtonnet (24) inséré dans l'extrémité ouverte du canal (18).

3. Pale selon la revendication 1 ou 2, **caractérisée en ce que** le canal (18) évoluant longitudinalement présente dans la zone de la section de couplage (15) au moins sur une section terminale (20) une forme géométrique excentrée par rapport à l'axe du canal (18) évoluant longitudinalement.

4. Pale selon l'une des revendications précédentes, **caractérisée en ce que** l'élément chauffant (19) en forme de bougie ou de bâtonnet comporte au moins une tige ou bâtonnet métallique essentiellement cylindrique ou, selon le cas, une pièce de tête métallique (21), lequel ou laquelle est raccordé/e aux câbles d'alimentation électrique (22) noyés dans une gaine souple.

5. Pale selon l'une des revendications précédentes, **caractérisée en ce qu'**elle comprend au moins une goupille (24) qui sert à être insérée dans la section terminale (20) du canal (18) évoluant longitudinalement pour fixer l'élément chauffant (19) dans ce canal (18) et permettre en même temps le passage des câbles d'alimentation électrique (22).

6. Pale selon l'une des revendications précédentes, **caractérisée en ce que** la goupille (24) forme sur le côté une surface inclinée (25) qui permet le passage des câbles d'alimentation électrique, la goupille (24) formant de plus un trou (27) de passage en oblique qui sert à fixer la goupille (24) par rapport à la pale, avec au moins une vis, laquelle vient en prise dans un trou fileté (17) prévu dans la section de couplage (15), et à fixer avec la même vis la section de couplage (15) par rapport au moyeu (6), dans lequel est prévu un trou de fixation pour chaque pale.

7. Pale selon l'une des revendications précédentes, **caractérisée en ce qu'**elle comporte au moins un ressort en hélice (28) pour fixation élastique et **en ce que** le ressort en hélice (28) est agencé dans le canal évoluant longitudinalement (18) entre la goupille (24) et l'élément chauffant (19) par verrouillage sous pression ou, selon le cas, par précontrainte sous pression.

8. Rotor d'appareil soufflant doté de plusieurs pales calées sur le moyeu (4) d'un arbre de rotor (6), l'arbre de rotor (6) étant muni d'au moins un canal axial traversant (9) aux extrémités opposées duquel sont prévus dans un but d'alimentation électrique, des moyens de connexion électrique (11), par exemple des moyens de balai et des moyens électriques de distribution fixés et répartis à même distance angulaire sur un disque (12), lesquels sont raccordés au moyeu (4), les moyens de connexion (10) et les moyens de distribution (11) étant raccordés l'un à l'autre au moyen d'un conducteur électrique (13), conduit à travers la cavité axiale (9) de l'arbre (6),
**caractérisé en ce que**
les pales sont configurées selon l'une des revendications précédentes.
